# EUROPEAN PATENT SPECIFICATION

(11) **EP 4 465 019 B1**
(45) Date of publication and mention of the grant of the patent: **25.11.2026**
(21) Application number: 24176862.1
(22) Date of filing: 20.05.2024
(51) Int. Cl.: G01N 21/359, G01N 21/85, G01N 21/3563, G01N 21/3577, G01N 21/03

(54) **MULTI-FUNCTIONAL ON-LINE SPECTRAL ACQUISITION DEVICE**
MULTIFUNKTIONALE ON-LINE-SPEKTRALERFASSUNGSVORRICHTUNG
DISPOSITIF D'ACQUISITION SPECTRALE EN LIGNE MULTIFONCTIONNEL

(30) Priority: 19.05.2023 CN 202310565049
(43) Date of publication of application: 20.11.2024
(73) Proprietor: IAS Global Co., Ltd, Wuxi, Jiangsu Province 214111 (CN)
(72) Inventor: NIU, Guangzhi, Wuxi, 214111 (CN); LAN, Shuming, Wuxi, 214111 (CN); LIU, Kangsheng, Wuxi, 214111 (CN); ZHOU, Yang, Wuxi, 214111 (CN)
(74) Representative: Hautier IP - MC/EP

(56) References cited:
- US-A- 4 113 390
- US-A- 5 410 413
- US-A- 6 100 526
- US-A1- 2015 160 125

## Description

### Technical Field

The present disclosure relates to the field of near-infrared analyzers, and in particular to multifunctional on-line spectral acquisition devices.

### Background Art

Near-infrared (NIR) light is a wave of electromagnetic radiation between visible and mid-infrared light, and it is the first non-visible region that people found in the absorption spectrum. The near-infrared spectral region is consistent with the absorption region of the combined frequency and all levels of octave frequency of the vibration of hydrogen-containing groups (O-H, N-H, C-H) in organic molecules. By scanning the near-infrared spectra of the samples, it is possible to obtain the characteristic information of the hydrogen-containing groups of the organic molecules in the samples, and the analysis of samples by using near-infrared spectroscopy has the advantages of being convenient, rapid, efficient, accurate and less costly, not destroying the samples, not consuming the chemicals and not polluting the environment, so this technique has attracted more and more attention in the field.

A flow cell for a spectrometer is disclosed in Chinese Utility Model CN217717483U, which comprises a flow cell body having a channel for material flow, a fiber optic focusing head and a crystal set opposite to each other and perpendicular to the direction of the material flow. Infrared light is emitted through one fiber optic focusing head, and after passing through the crystal and passing through the material, it is received by the other fiber optic focusing head, and then introduced into the host of the spectrometer for collection and analysis. However, the system can only realize single spectra acquisition of transparent liquid or single spectra acquisition of non-transparent liquid. Such a single function cannot meet the existing demand.

US patent publication No.US5410413 provides an optical probe head for determining properties of the sample as a function of the depth of the sample, which is made up of a gradient index lens, at least one face of which is in contact with the sample, a number of transmitting optical fibers, preferably made up of a number of concentrically located sets, for inputting radiation into the gradient index lens in at least two optical locations, a mechanism for cycling the input radiation among the transmitting optical fibers, a receiving optical fiber, preferably centrally located, for receiving reflected radiation and a mechanism for processing the reflected radiation to obtain depth-related reflection information.

US patent publication No. US2015160125 describes a Zero Angle Photon Spectrometer with the additional hardware and software to support a variable path length instrument. In one example, the disclosed technology can be used as an in-line, on-line instrument for monitoring various chemical parameters in a fluid system on a continuous or intermittent basis, such as for water flowing by a monitoring station containing the disclosed technology. Such a system may be used for monitoring natural, drinking, purified, or wastewaters from industrial or municipal facilities for routine screening and as an indicator of changes in the water.

US patent publication No. US6100526 provides a grain quality monitor. Percentage concentrations of constituents of a sample of cereal grain or other agricultural product in a flowing stream are determined while harvesting or processing using a short wave near infrared analyzer. The analyzer irradiates the sample, picks up diffuse reflectance of individual wavelengths from the sample and spatially separates the diffuse reflectance into a response at individual wavelengths. The result is to simultaneously detect the intensities of the individual wavelengths in parallel from the same portion of the product being analyzed. Percentage constituents of the composite substance may then be compared with known percentage constituents to determine the constituents. The analyzer is optically stabilized and is therefore suitable for attaching to the agricultural combine to perform real time measurements in the field.

### Summary

In order to overcome the above-mentioned defects, embodiments of the present disclosure provide a multifunctional on-line spectral acquisition device, which is capable of not only sampling transparent liquids, non-transparent liquids, and solid particles, but also conducting real-time on-line spectra acquisition of reference samples.

In order to achieve the above purpose, the multifunctional on-line spectral acquisition device as defined with independent claim 1 of the present disclosure comprises - *inter alia* and as further defined with claim 1 - a circulation unit having an inlet, an outlet and a detection window; an sampling module comprising a support assembly connected to the circulation unit; a first plate part, a first light-transmitting part, a second light-transmitting part and a second plate part, all of which are disposed in the axial direction of the detection window and are disposed in the support assembly from the inside to the outside of the circulation unit, the first plate part and the first light-transmitting part being disposed in the circulation unit, the second light-transmitting part and the support assembly jointly sealing the detection window, and a sample flow space provided between the second light-transmitting part and the first light-transmitting part; an optical switching module disposed between the second light-transmitting part and the second plate part, the optical switching module having a first state and a second state; and a multi-core optical fiber disposed on the sampling module at an angle with respect to the second light-transmitting part, wherein in the first state, light from the multi-core optical fiber is reflected to the second plate part via the light path switching module, and in the second state, light from the multi-core optical fiber is directed through the second light-transmitting part into the circulation unit.

The first state is a state of on-line sampling a reference sample, and the second state is a status of sampling a sample to be tested.

In some embodiments, a sampling module is provided on the circulation unit, the sampling module comprising a first plate part and a first light-transmitting part provided inside the circulation unit, a second light-transmitting part and a second plate part provided outside the circulation unit, and an light path switching module provided between the second light-transmitting part and the second plate part, and the light path is changed by switching the light path switching module between the first state and the second state, thereby realizing the sampling a testing sample or the sampling of a reference sample to satisfy a multi-demand test.

The light path switching module includes a bracket provided between the second light-transmitting part and the second plate part, the bracket including a base plate provided with a reflector and a shading portion protruding toward the second plate part relative to the base plate; the bracket being movable relative to the second plate part so as to switch between the first state and the second state. In the first state, the reflector is disposed on an extension line of the multi-core optical fiber, and light emitted from the multi-core optical fiber is irradiated to the reflector, and reflected by the reflector to the second plate part. Due to the reversibility of light, the light diffusely reflected by the second plate part is reflected again by the reflector, received by the multi-core optical fiber, and transmitted to the spectrometer, so as to realize on-line sampling of a reference sample. In the second state, the reflector and the multi-core optical fiber are interlaced, the shading portion shields the side of the multi-core optical fiber toward the second plate part, and the light emitted from the multi-core optical fiber is irradiated through the second light-transmitting part to the circulation unit, where the light is reflected by the testing sample or by the first plate part, and then returned to be received by the multi-core optical fiber, and is transmitted to the spectrometer for detection of the testing sample.

The base plate is slidably coupled to the support assembly, the reflector and the shading portion are arranged in a row along a sliding direction of the base plate, and switching between the first state and the second state is accomplished by sliding of the base plate to adjust the position of the reflector or the shading portion with respect to the second plate part.

In some embodiments, the light path switching module further includes a driving mechanism for driving the movement of the support and a position sensor for detecting the position of the support. The driving mechanism includes a motor, a gear is provided on the output shaft of the motor, a rack is provided on the side of the base plate backing toward the multi-core optical fiber to be matched with the gear, and a guiding mechanism is provided between the base plate and the support assembly. The side of the base plate facing the multi-core optical fiber is lined with a reflector and a shading portion along the extension direction of the rack. By setting a position sensor and a driving mechanism, precise and automatic control of the position of the support is realized, which facilitates the switching between different functions and improves the inspection efficiency.

In some embodiments, the guiding mechanism may include a guiding slide rail and a slide groove provided between the base plate and the support assembly, the guiding slide rail being provided in parallel with the rack. Specifically, the guiding slide may be fixedly provided on the support assembly, and a slider is attached to the base plate, the slider having a slide groove that is compatible with the guiding slide, so that the rack slides in accordance with a predetermined path.

**In some** embodiments, the shading portion includes a shading plate and a side plate connecting the shading plate and the base plate, a side of the shading plate back to the second plate part and the side plate enclosing a shading space, and a side of the shading space facing the multi-core optical fiber is an opening structure; in the second state, light from the multi-core optical fiber irradiates the second light-transmitting part through the opening structure. By shielding the second plate part with the shading portion, stray light generated by the diffuse reflection effect of the second plate part is avoided when the sample to be tested is sampled.

In some embodiments, a black layer is formed on the surface of a structural part in the sampling module by sandblasting, and the structural part includes a support assembly, a base plate, and a shading portion. Typically, the parts of the sampling module that will be reflected by light in the second state are sandblasted and processed to form a black layer, so that the majority of the reflected light is absorbed by the black structural parts, reducing stray light and improving the upper limit of absorbance of the testing sample by the light path system.

In some embodiments, the multi-core optical fiber includes a light emitting optical fiber and a light receiving fiber. In some embodiments, the multi-core optical fiber includes a light receiving optical fiber and a plurality of light emitting optical fibers disposed around the light receiving optical fiber to achieve dual functions of light sending and light receiving.

In some embodiments, the angle α between the multi-core optical fiber and the axis of the second light-transmitting part satisfies 8° < α < 90°. Typically, the angle α between the multi-core optical fiber and the axis of the second light-transmitting part may be set to 30° to 45°.

In some embodiments, the circulation unit includes a circulation unit body, an inlet and an outlet are provided at opposite ends of the circulation unit body, the circulation unit body includes a support plane, and a detection window is provided on the support plane. Connection portions for device connection are also provided at both ends of the circulation unit body.

In some embodiments, the support assembly includes a first support plate attached to the support plane, a fixing seat connected to the first support plate and extending inside the body of the circulation unit, a second support plate provided on the first support plate and for fixing a second plate part, a support seat provided on the second support plate and for fixing a multi-core optical fiber, and a sealing ring provided between the support plane and the first support plate.

In an embodiment of the present disclosure, a sampling module is provided on a circulation unit, the sampling module comprising a first plate part and a first light-transmitting part provided inside the circulation unit, a second light-transmitting part and a second plate part provided outside the circulation unit, and a light path switching module provided between the second light-transmitting part and the second plate part, and the light path is changed through switching of the light path switching module between the first state and the second state, thereby realizing the sampling of not only a testing sample but also a reference sample to satisfy a multi-demand test.

In an embodiment of the present disclosure, the light path switching module may include a bracket disposed between the second light-transmitting part and the second plate part, a driving mechanism for driving the bracket to slide, and a position sensor for detecting the position of the bracket, and through the cooperation of the driving mechanism and the position sensor, the position of the bracket can be accurately and automatically controlled, so that the bracket is able to automatically switch between the first state and the second state, thereby improving the efficiency of detection.

In embodiments of the present disclosure, the holder may include a base plate, a reflector provided on the base plate, and a shading portion projecting toward the second plate part with respect to the base plate. By sliding the base plate, the reflector is disposed in a line of extension of light and the reflected light can be directed to the second plate part, so that the device has a first state of on-line sampling a reference sample. By sliding the base plate, the reflector is staggered with the multi-core optical fiber, the shading portion blocks the side of the multi-core optical fiber toward the second plate part, and the light emitted from the multi-core optical fiber is irradiated through the second light-transmitting part into the circulation unit, thereby providing the device with a second state, i.e., sampling a testing sample.

In embodiments of the present disclosure, the testing sample in the circulation unit may be set as a transparent liquid or a non-transparent liquid or a solid, and the device is capable of realizing compatibility for the detection of transparent liquids, non-transparent liquids, solid powders or particles.

In embodiments of the present disclosure, the surface of the structural part is sandblasted to form a black layer in the sampling module, so that the vast majority of the reflected light is absorbed by the black structural part, reducing stray light, and increasing the upper limit of absorbance of the testing sample by the light path system.

In embodiments of the present disclosure, the multi-core optical fiber has both a light emitting fiber and a light receiving fiber, so as to achieve dual functions of light emitting and light receiving.

In embodiments of the present disclosure, a support plane is provided on the body of the circulation unit, and the support plane is able to cooperate with the sampling module to facilitate the realization of a sealed connection, and at the same time is able to support the sampling module.

### Brief description of drawings

FIG. 1 is a schematic diagram of a detection device in embodiment I of the present disclosure;
FIG. 2 is a cross-sectional view I of a detection device in embodiment I of the present disclosure;
FIG. 3 is a cross-sectional view II of the detection device in embodiment I of the present disclosure;
FIG. 4 is a schematic diagram of a circulation unit in embodiment I of the present disclosure;
FIG. 5 is a schematic diagram of the sampling module in embodiment one of the present disclosure;
FIG. 6 is a schematic diagram of the support assembly in embodiment one of the present disclosure;
FIG. 7 is a schematic diagram of a light path switching module in embodiment one of the present disclosure;
FIG. 8 is a schematic diagram of a bracket in embodiment one of the present disclosure;
FIG. 9 is a schematic diagram of a first end cross-section of a multi-core optical fiber in Example 1 of the present disclosure;
FIG. 10 is a schematic diagram of the light path during collection of a reference sample in embodiment one of the present disclosure;
FIG. 11 is a schematic diagram of a light path for detecting a transparent liquid in Example 1 of the present disclosure;
FIG. 12 is a schematic diagram of a light path for detecting a non-transparent liquid or solid in embodiment one of the present disclosure.

### Reference signs in the drawings:

| | | | | | |
|---|---|---|---|---|---|
| 1- | circulation unit; | 11- | inlet; | 12- | outlet; |
| 13- | detection window; | 14- | circulation unit body; | | |
| 141- | rectangular body; | 142- | tube body; | | |
| 143- | connection part; | 144- | support plane; | | |
| 2- | sampling module; | 21- | support assembly; | | |
| 211- | first support plate; | 212- | fixing seat; | | |
| 213- | second support plate; | 214- | supporting seat; | | |
| 22- | housing; | 23- | first plate part; | | |
| 24- | first light-transmitting part; | 25- | second light-transmitting part; | | |
| 26- | second plate part; | 27- | light path switching module; | | |
| 271- | bracket; | 2711- | base plate; | | |
| 2712- | reflector; | 2713- | shade; | | |
| 2714- | side plate; | 2715- | opening structure; | | |
| 2716- | shade space; | 2721- | motor; | | |
| 2722- | gear; | 2723- | rack; | | |
| 2724- | guide slide; | 2725- | slider; | | |
| 273- | position sensor; | 28- | fixing ring | | |
| 3- | multi-core optical fiber; | 31- | light-receiving optical fiber; | | |
| 32- | light-emitting optical fiber. | | | | |

### Detailed description

The embodiments of the present disclosure will be described below in conjunction with the accompanying drawings of the embodiments of the present disclosure, and it is clear that the described embodiments are only a part of the embodiments of the present disclosure and not all of the embodiments. Based on the embodiments of the present disclosure, all other embodiments, limited only by the scope the appended claims, shall fall within the scope of protection of the present disclosure.

### Embodiment I

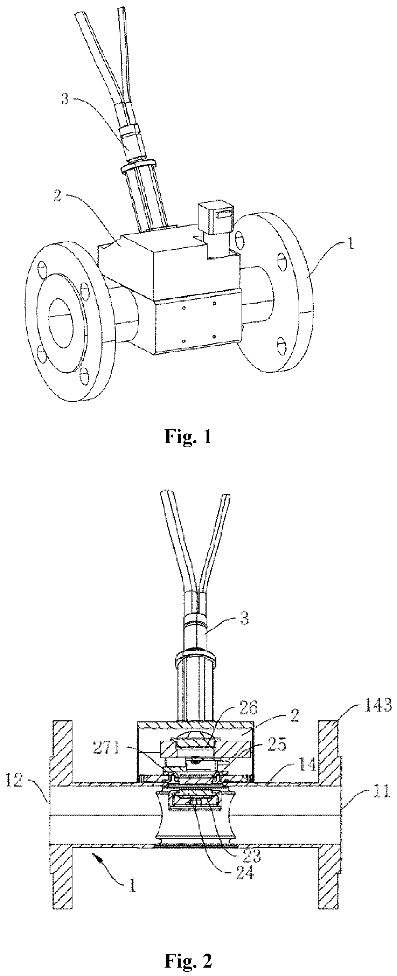

Referring to FIG. 1, a multifunctional on-line spectral acquisition device according to an embodiment of the present disclosure comprises a circulation unit 1 for the flow of a sample to be measured, a sampling module 2 connected to the circulation unit 1 and partially extending to the interior of the circulation unit 1, and a multi-core optical fiber 3 provided on the sampling module 2 and used for transmitting and receiving light.

Referring to FIGS. 2 to 4, the circulation unit 1 includes a circulation unit body 14, and the circulation unit body 14 has a cavity structure inside. The circulation unit body 14 includes a rectangular body 141 and tubes 142 connected to both sides of the rectangular body 141, with an inlet 11 and an outlet 12 formed at one end of the tubes 142 that is opposite to the rectangular body 141. The tubes 142 are also provided with a connection portion 143 for connecting the devices. The upper surface of the rectangular body 141 forms a support plane 144, and a detection window 13 is provided on the support plane 144. The circulation unit body 14 may be provided in other shapes capable of realizing the same function in addition to including the rectangular body 141 and the two opposite tube bodies 142.

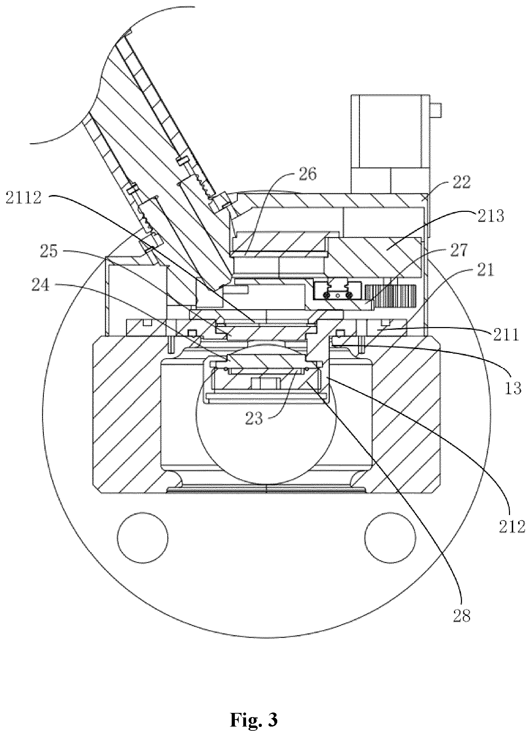

Referring to FIGS. 2 and 3, the sampling module 2 includes a support assembly 21 coupled to the circulation unit 1; a housing 22 provided on the outside of the support assembly 21; a first plate part 23, a first light-transmitting part 24, a second light-transmitting part 25, and a second plate part 26 disposed in the axial direction along the detection window 13 from the inside of the circulation unit 1 to the outside of the support assembly 21 in sequence; a light path switching module 27 disposed between the second light-transmitting part 25 and the second plate part 26; and the light path switching module 27 having a first state and a second state. 25 and the second plate part 26; a light path switching module 27 provided between the second light transmissive part 25 and the second plate part 26, the light path switching module 27 having a first state and a second state. The plate part may be a light-impermeable whiteboard or other light-impermeable part. The light transmitting part may be a transparent glass or other part that transmits light. The first plate part 23 and the first light-transmitting part 24 are located inside the circulation unit 1, and the second light-transmitting part 25 seals the inspection window 13 together with the support assembly 21. A sample flow space is formed between the second light-transmitting part 25 and the first light-transmitting part 24.

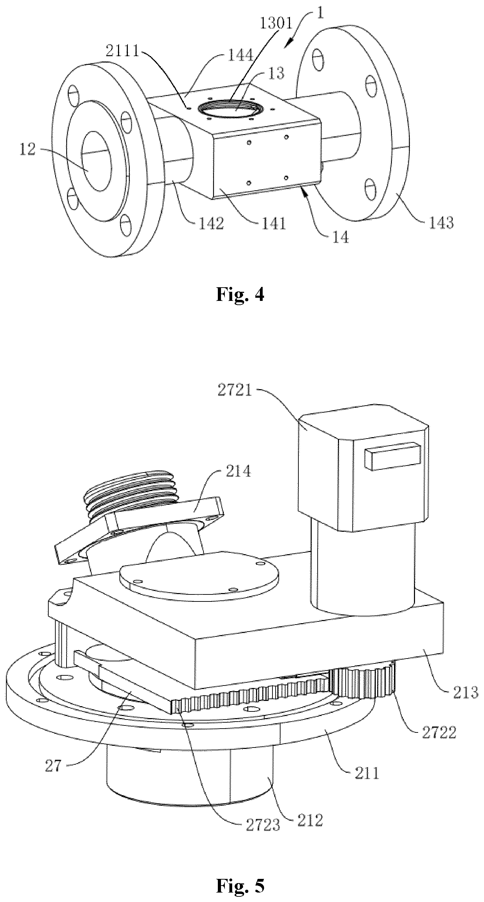

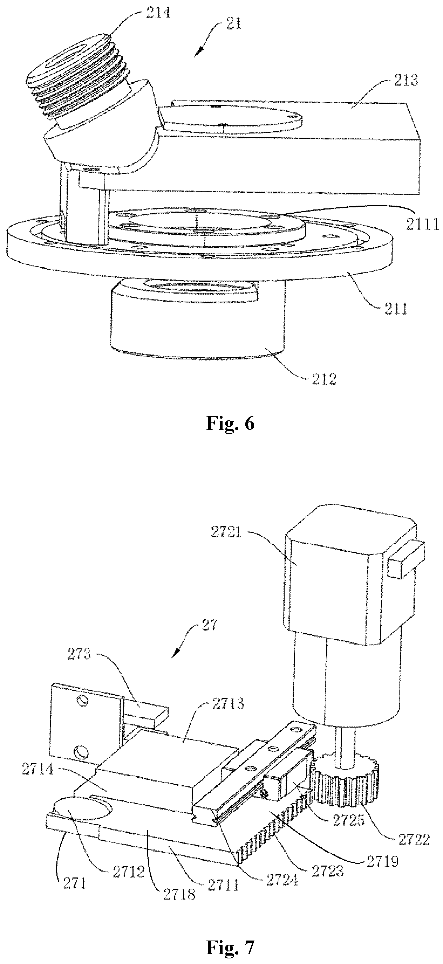

Referring to FIGS. 4 and 6, the support assembly 21 includes a first support plate 211 connected to the support plane 144; a fixing seat 212 connected to the first support plate 211 and extending to the interior of the circulation unit body 14; a second support plate 213 provided above the first support plate 211 and fixing the second plate part 26, with a space between the first support plate 211 and the second support plate 213 for setting an light path switching module 27; and a support seat 214 provided on the second support plate 213 and for fixing the multi-core optical fiber 3. Matching connection holes 2111 are provided in the support plane 144 and the first support plate 211, and the support part 21 and the circulation unit body 14 are connected by, e.g., bolts provided in the connection holes 2111. The circumferential detection window 13 is also provided with a circumferentially shaped recess 1301 for placing a sealing ring to ensure a sealing connection between the sampling module 2 and the circulation unit body 14. Specifically, the sealing ring within the recess 1301 and the rectangular body 141 together seal the detection window 13 to prevent leakage of the tested liquid within the circulation unit body 14. The first plate part 23 and the first light-transmitting part 24 are provided within the fixing seat 212.

Referring to FIG. 3, the first light-transmitting part 24 has a step structure, which facilitates placing a sealing washer between the first light-transmitting part 24 and the fixing ring 28 to seal the fixing seat 212 and form a sealing cavity, preventing foreign matter from entering the cavity to cause contamination of the first plate part 23, and thus providing protection for the first plate part 23. The first support plate 211 is provided with a through-hole 2112 opposite the detection window 13, and the second light-transmitting part 25 is disposed within the through-hole 2112. The second light-transmitting part 25 has a step structure and seals the detection window 13 together with the first support plate 211. the second plate part 26 is provided on the second support plate 213 and is opposite to the second light-transmitting part 25. The support seat 214 is provided with an external thread, capable of being threadedly connected to the multi-core optical fiber 3. Other connection methods may also be used in addition to the threaded connection method.

Referring to FIGS. 2 and 7, the light path switching module 27 includes a bracket 271 disposed between the second light-transmitting part 25 and the second plate part 26, a drive mechanism for driving the movement of the bracket 271, and a position sensor 273 for detecting the position of the bracket 271. The control system determines the position of the bracket 271 by the position sensor 273, and thereby controls the drive mechanism to drive the bracket 271 to move.

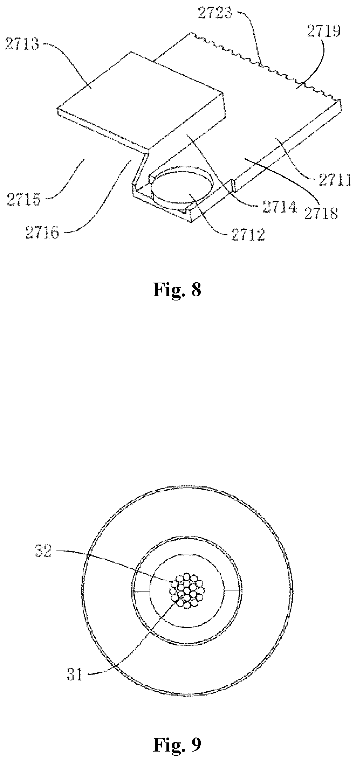

Referring to FIG. 8, the holder 271 includes a base plate 2711 on which a reflector 2712 and a shading portion 2717 projecting with respect to the base plate 2711 toward the second plate part 26 are provided. the holder 271 is capable of moving with respect to the second plate part 26, thereby realizing switching between the first state and the second state. The base plate 2711 is L-shaped and includes a first dividing plate 2718 and a second dividing plate 2719 perpendicular to each other. a notch between the first dividing plate 2718 and the second dividing plate 2719 faces the side of the multi-core optical fiber 3. A shading portion 2717 is formed above the notch by the base plate 2711 projecting upwardly.

The shading portion 2717 includes a shading plate 2713 and a side plate 2714 connecting the shading plate 2713 to the base plate 2711. A side of the shading plate 2713 that is back to the second plate part 26 and the side plate 2714 enclose a shading space 2716, and the side of the shading space 2716 that is toward the multi-core optical fiber 3 is an opening structure 2715 that allows light from the multi-core optical fiber 3 to be directed into the shading space 2716. A reflector 2712 is disposed at an end of the first dividing plate 2718 facing the multi-core optical fiber 3 proximate the multi-core optical fiber 3.

Referring again to FIG. 7, the driving mechanism includes a motor 2721. A gear 2722 is provided on the output shaft of the motor 2721. Arack 2723 is provided on the side of the second dividing plate 2719 that is back on to the multi-core optical fiber 3 that is compatible with the gear 2722, and a guiding mechanism is provided between the base plate 2711 and the support assembly 21. The guiding mechanism includes a guiding slide 2724 provided on the second support plate 213, a slider 2725 provided on the second sub-plate 2719, the slider 2725 having a sliding groove that cooperates with the guiding slide 2724 so that the bracket 271 slides in a predetermined path.

A black layer is formed on the surface of the structural part in the sampling module 2 by sandblasting. The structural part includes a support assembly 21, a base plate 2711, a shading portion, and other portions that will be reflected by light. By providing the black layer, the majority of the reflected light is absorbed by the black structural part, the stray light is reduced, and the upper limit of absorbance of the sample to be measured by the light path system is improved.

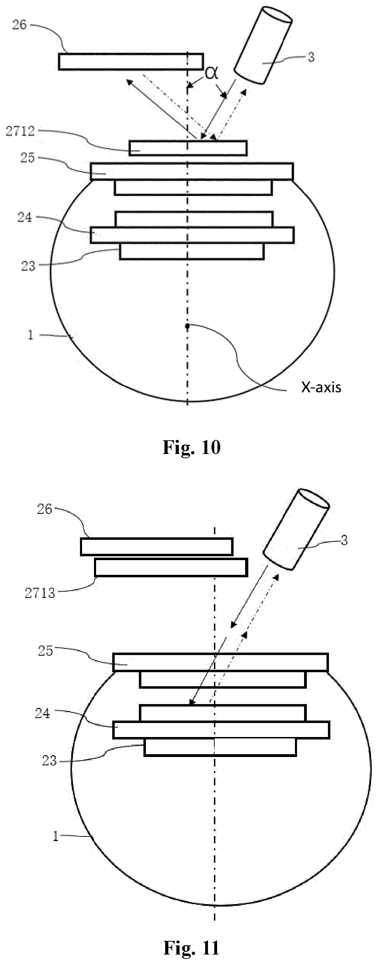

Referring to FIG. 10, the multi-core optical fiber 3 is attached to the support seat 214 at an inclination of 35° with respect to the axis of the second light-transmitting part 25. Here, an angle α between the multi-core optical fiber 3 and the axis of the second light-transmitting part 25 may be from 8° to 90°, and typically, from 30° to 45°.

Referring back to FIG. 9, the multi-core optical fiber 3 comprises a light receiving optical fiber 31 and a plurality of light emitting optical fibers 32 disposed around the light receiving optical fiber 31 to achieve a dual function of light emitting and light receiving. Referring to FIGS. 10 and 11, the light ejection end of the multi-core optical fiber 3 extends into the sampling module 2 and is disposed between the shading plate 2713 and the reflector 2712 in the axial direction of the detection window 13, thereby ensuring that in a first state the light is emitted to the reflector 2712; and that in a second state, the shading plate 2713 is capable of completely shielding the second plate part 26, and that the light is emitted into the shielding space 2716.

Referring to FIG. 10 for a schematic diagram of the light path during in-line collection of a reference sample, the light path switching module 27 is in a first state when the reference sample is sampled. The reflector 2712 on the base plate 2711 is located on the extension line of the light emitting optical fiber 32. The light from the light emitting optical fiber 32 can be reflected to the second plate part 26 by the reflector 2712. That is, the shading portion 2717 does not form a shading between the reflector 2712 and the second plate part 26. Due to the reversibility of light, the light diffusely reflected by the second plate part 26 is reflected again by the reflector 2712 and is received by the light-receiving optical fiber 31 in the center of the multi-core optical fiber 3, and is finally transmitted to the spectrometer to achieve the purpose of on-line sampling the reference sample.

Referring to FIG. 11 for a schematic diagram of the light path when detecting a transparent liquid. The light path switching module 27 is in a second state when detecting the transparent liquid. The reflector 2712 is misaligned with the multi-core optical fiber 3, and the shading portion 2717 shields the side of the multi-core optical fiber 3 toward the second plate part 26. The light from the light emitting fiber 32 in the multi-core optical fiber 3 passes through the second light transmitting part 25, the transparent liquid, the first light transmitting part 24 in turn and then shoots to the first plate part 23, and then the light is reflected by the first plate part 23 back to the light receiving fiber 31 in the multi-core optical fiber 3, and finally passes to the spectrometer to achieve the purpose of on-line testing the transparent liquid.

In the process, when the light from the light emitting optical fiber 32 passes through the second light transmitting part 25, some of the light is reflected into the cavity of the sampling module 2. Since the structural parts in the cavity have been treated to be black and the second plate part 26 is blocked by the light shading portion 2717, the vast majority of the reflected light is absorbed by the black structural parts, which significantly reduces the stray light and improves the upper limit of the absorbance of the samples to be tested by the light path system.

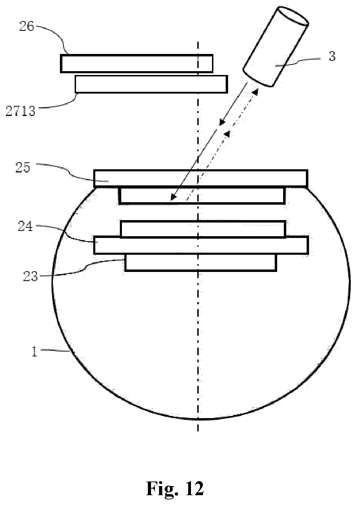

Referring to FIG. 12, a schematic diagram of the light path when detecting non-transparent liquids or solid particles or solid powders is shown. When detecting non-transparent liquids or solids, the light path switching module 27 is in a second state. The reflector 2712 is misaligned with the multi-core optical fiber 3, and the shading portion 2717 shields the side of the multi-core optical fiber 3 toward the second plate part 26. The light from the light emitting fiber 32 in the multi-core optical fiber 3 passes through the second light transmitting part 25 and then shines onto the non-transparent liquid or solid, and due to the presence of the non-transparent liquid or solid, the light returns to the light receiving fiber 31 in the multi-core optical fiber 3 in the reverse direction before it reaches the first light transmitting part 24 and the first plate part 23, and finally passes into a spectrometer, for the purpose of on-line detection of the non-transparent liquid or solid.

During the above detection process, the testing sample is always in the state of filling the flow-through unit 1, so that the device has a stable optical range to ensure the accuracy of the detection results.

The above embodiments have been used to illustrate the principles and implementations of the present disclosure, and the illustrations of the above embodiments are only used to help understand the method of the present disclosure and its core ideas. Based on the ideas of the present disclosure, a variety of formal and detailed changes can be carried out in the specific implementations and the scope of the application by those skilled in the art. Accordingly, the contents of the description hereinabove should not be construed as a limitation of this disclosure; the invention is limited only by the scope of the appended claims.

## Claims

1. A multifunctional on-line spectral acquisition device comprising:
A circulation unit (1) having an inlet (11), an outlet (12) and a detection window (13);
a sampling module (2) comprising:
a support assembly (21) connected to the circulation unit (1);
a first plate part (23), a first light-transmitting part (24), a second light-transmitting part (25) and a second plate part (26) disposed on the support assembly (21) in an axial direction along the detection window (13) from the inside to the outside of the circulation unit (1), the first plate part (23) and the first light-transmitting part (24) disposed in the circulation unit (1), and the second light-transmitting part (25) and the support assembly (21) together sealing the detection window (13), and a sample flow space being provided between the second light-transmitting part (25) and the first light-transmitting part (24); the second plate part (26) being configured to diffusely reflect light; and
a light path switching module (27) provided between the second light-transmitting part (25) and the second plate part (26), the light path switching module (27) having a first state and a second state; and
a multi-core optical fiber (3) disposed on the sampling module (2) at an angle with respect to the second light-transmitting part (25),
wherein in the first state, light from the multi-core optical fiber (3) is reflected by a reflector (2712) comprised in the light path switching module (27) to the second plate part (26); and in the second state, light from the multi-core optical fiber (3) is directed through the second light-transmitting part (25) into the circulation unit (1), **characterized in that**:
the light path switching module (27) comprises a bracket (271) provided between the second light transmitting part (25) and the second plate part (26), the bracket (271) comprising a base plate (2711) which is provided with the reflector (2712) and a shading portion (2713) protruding with respect to the base plate (2711) towards the second plate part (26), the bracket (271) being movable with respect to the second plate part (26) so as to realize a switch between the first state and the second state; and
the base plate (2711) is slidingly connected to the support assembly (21), the reflector (2712) and the shading portion (2713) are arranged in a row along the sliding direction of the base plate (2711), and switching between the first state and the second state is accomplished by sliding of the base plate (2711) in order to adjust the position of the reflector (2712) or the shading portion (2713) with respect to the second plate part (26).

2. The multifunctional online spectral acquisition device according to claim 1, wherein
the light path switching module (27) further comprises a driving mechanism for driving the support assembly (21) to move and a position sensor (273) for detecting the position of the support assembly (21), the driving mechanism comprising a motor (2721), a gear (2722) provided on the output shaft of the motor (2721), a rack (2723) mating with the gear (2722) and provided on the side of the base plate (2711) back on to the multi-core optical fiber (3), and a guiding mechanism provided between the base plate (2711) and the support assembly (21).

3. The multifunctional on-line spectral acquisition device according to claim 1, wherein
the shading portion comprises a shading plate (2713) and a side plate (2714) in connection with the shading plate (2713) and the base plate (2711), the side of the shading plate (2713) back on to the second plate part (26) and the side plate (2714) enclosing a shade space (2716), the side of the shad space (2716) facing the multi-core optical fiber (3) being an opening structure (2715); and wherein in the second state, light from the multi-core optical fiber (3) irradiates the second light-transmitting part (25) through the opening structure (2715).

4. The multifunctional on-line spectral acquisition device according to claim 1, wherein
the surface of a structural part in the sampling module (2) is formed with a black layer by sandblasting, the structural part comprising the support assembly (21), the base plate (2711), and the shading portion.

5. The multifunctional on-line spectral acquisition device according to claim 1, wherein
the multi-core optical fiber (3) comprises a light emitting optical fiber (32) and a light receiving optical fiber (31).

6. The multifunctional on-line spectral acquisition device according to claim 1, wherein
an angle α between the multi-core optical fiber (3) and the axis of the second light-transmitting part (25) satisfies 8° < α < 90°.

7. The multifunctional online spectral acquisition device according to claim 1, wherein
the circulation unit (1) comprises a circulation unit body (14), the inlet (11) and the outlet (12) being provided at opposite ends of the circulation unit body (14), the circulation unit body (14) comprising a support plane (144) on which the detection window (13) is provided.

8. The multifunctional on-line spectral acquisition device according to claim 7, wherein
the support assembly (21) comprises a first support plate (211) attached to the support plane (144), a fixing seat (212) connected to the first support plate (211) and extending to the inside of the circulation unit body (14), a second support plate (213) provided on the first support plate (211) and used to fix the second plate part (213), a support seat (214) provided on the second support plate (213) for fixing the multi-core optical fiber (3), and a sealing ring provided between the support plane (144) and the first support plate (211).

9. The multifunctional online spectral acquisition device according to claim 1, wherein
the first plate part (23) and the second plate part (26) are whiteboards, and the first light-transmitting part (24) and the second light-transmitting part (25) are glass.

## Patentansprüche

1. Multifunktionale Online-Spektralerfassungsvorrichtung, umfassend:
eine Zirkulationseinheit (1) mit einem Einlass (11), einem Auslass (12) und einem Detektionsfenster (13);
ein Probenahmemodul (2), umfassend:
eine Stützanordnung (21), die mit der Zirkulationseinheit (1) verbunden ist,
ein erstes Plattenteil (23), ein erstes lichtdurchlässiges Teil (24), ein zweites lichtdurchlässiges Teil (25) und ein zweites Plattenteil (26), die auf der Stützanordnung (21) in axialer Richtung entlang des Detektionsfensters (13) von innen nach außen der Zirkulationseinheit (1) angeordnet sind, wobei das erste Plattenteil (23) und das erste lichtdurchlässige Teil (24) in der Zirkulationseinheit (1) angeordnet sind, wobei das zweite lichtdurchlässige Teil (25) und die Stützanordnung (21) zusammen das Detektionsfenster (13) abdichten, wobei ein Probenflussraum zwischen dem zweiten lichtdurchlässigen Teil (25) und dem ersten lichtdurchlässigen Teil (24) vorgesehen ist, und wobei das zweite Plattenteil (26) konfiguriert ist, um Licht diffus zu reflektieren, und
ein Lichtwegschaltmodul (27), das zwischen dem zweiten lichtdurchlässigen Teil (25) und dem zweiten Plattenteil (26) vorgesehen ist, wobei das Lichtwegschaltmodul (27) einen ersten Zustand und einen zweiten Zustand aufweist, und
eine mehradrige optische Faser (3), die auf dem Probenahmemodul (2) in einem Winkel in Bezug auf den zweiten lichtdurchlässigen Teil (25) angeordnet ist,
wobei im ersten Zustand Licht von der mehradrigen optischen Faser (3) von einem Reflektor (2712), der in dem Lichtwegschaltmodul (27) enthalten ist, zu dem zweiten Plattenteil (26) reflektiert wird, und wobei im zweiten Zustand Licht von der mehradrigen optischen Faser (3) durch den zweiten lichtdurchlässigen Teil (25) in die Zirkulationseinheit (1) geleitet wird, **dadurch gekennzeichnet, dass**:
das Lichtwegschaltmodul (27) eine Halterung (271) umfasst, die zwischen dem zweiten lichtdurchlässigen Teil (25) und dem zweiten Plattenteil (26) vorgesehen ist, wobei die Halterung (271) eine Basisplatte (2711) umfasst, die mit dem Reflektor (2712) versehen ist, und einen Beschattungsabschnitt (2713), der in Bezug auf die Basisplatte (2711) in Richtung des zweiten Plattenteils (26) vorsteht, wobei die Halterung (271) in Bezug auf das zweite Plattenteil (26) beweglich ist, um ein Umschalten zwischen dem ersten Zustand und dem zweiten Zustand zu realisieren, und
die Basisplatte (2711) gleitend mit der Stützanordnung (21) verbunden ist, wobei der Reflektor (2712) und der Beschattungsabschnitt (2713) in einer Reihe entlang der Gleitrichtung der Basisplatte (2711) angeordnet sind, und wobei das Umschalten zwischen dem ersten Zustand und dem zweiten Zustand durch Gleiten der Basisplatte (2711) erreicht wird, um die Position des Reflektors (2712) oder des Beschattungsabschnitts (2713) in Bezug auf das zweite Plattenteil (26) einzustellen.

2. Multifunktionale Online-Spektralerfassungsvorrichtung nach Anspruch 1, wobei
das Lichtwegschaltmodul (27) ferner einen Antriebsmechanismus zum Antreiben der Stützanordnung (21) zum Bewegen und einen Positionssensor (273) zum Detektieren der Position der Stützanordnung (21) umfasst, wobei der Antriebsmechanismus einen Motor (2721), ein Zahnrad (2722), das auf der Ausgangswelle des Motors (2721) vorgesehen ist, eine Zahnstange (2723), die mit dem Zahnrad (2722) zusammenpasst und auf der von der mehradrigen optischen Faser (3) abgewandten Seite der Basisplatte (2711) vorgesehen ist, und einen Führungsmechanismus, der zwischen der Basisplatte (2711) und der Stützanordnung (21) vorgesehen ist, umfasst.

3. Multifunktionale Online-Spektralerfassungsvorrichtung nach Anspruch 1, wobei
der Beschattungsabschnitt eine Beschattungsplatte (2713) und eine Seitenplatte (2714) in Verbindung mit der Beschattungsplatte (2713) und mit der Basisplatte (2711) umfasst, wobei die dem zweiten Plattenteil (26) abgewandte Seite der Beschattungsplatte (2713) und die Seitenplatte (2714) einen Beschattungsraum (2716) einschließen, wobei die der mehradrigen optischen Faser (3) zugewandte Seite des Beschattungsraums (2716) eine Öffnungsstruktur (2715) ist, und wobei im zweiten Zustand Licht von der mehradrigen optischen Faser (3) den zweiten lichtdurchlässigen Teil (25) durch die Öffnungsstruktur (2715) bestrahlt.

4. Multifunktionale Online-Spektralerfassungsvorrichtung nach Anspruch 1, wobei
die Oberfläche eines Strukturteils in dem Probenahmemodul (2) durch Sandstrahlen mit einer schwarzen Schicht gebildet ist, wobei das Strukturteil die Stützanordnung (21), die Basisplatte (2711) und den Beschattungsabschnitt umfasst.

5. Multifunktionale Online-Spektralerfassungsvorrichtung nach Anspruch 1, wobei
die mehradrige optische Faser (3) eine lichtemittierende optische Faser (32) und eine lichtempfangende optische Faser (31) umfasst.

6. Multifunktionale Online-Spektralerfassungsvorrichtung nach Anspruch 1, wobei
ein Winkel α zwischen der mehradrigen optischen Faser (3) und der Achse des zweiten lichtdurchlässigen Teils (25) 8° <α < 90° erfüllt.

7. Multifunktionale Online-Spektralerfassungsvorrichtung nach Anspruch 1, wobei
die Zirkulationseinheit (1) einen Zirkulationseinheitskörper (14) umfasst, wobei der Einlass (11) und der Auslass (12) an gegenüberliegenden Enden des Zirkulationseinheitskörpers (14) vorgesehen sind, und wobei der Zirkulationseinheitskörper (14) eine Stützebene (144) umfasst, auf der das Detektionsfenster (13) vorgesehen ist.

8. Multifunktionale Online-Spektralerfassungsvorrichtung nach Anspruch 7, wobei
die Stützanordnung (21) eine erste Stützplatte (211) umfasst, die an der Stützebene (144) angebracht ist, einen Befestigungssitz (212), der mit der ersten Stützplatte (211) verbunden ist und sich zum Inneren des Zirkulationseinheitskörpers (14) erstreckt, eine zweite Stützplatte (213), die an der ersten Stützplatte (211) vorgesehen ist und zum Befestigen des zweiten Plattenteils (213) verwendet wird, einen Stützsitz (214), der auf der zweiten Stützplatte (213) zum Befestigen der mehradrigen optischen Faser (3) vorgesehen ist, und einen Dichtungsring, der zwischen der Stützebene (144) und der ersten Stützplatte (211) vorgesehen ist.

9. Multifunktionale Online-Spektralerfassungsvorrichtung nach Anspruch 1, wobei
das erste Plattenteil (23) und das zweite Plattenteil (26) Whiteboards sind und das erste lichtdurchlässige Teil (24) und das zweite lichtdurchlässige Teil (25) Glas sind.

## Revendications

1. Dispositif d'acquisition spectrale en ligne multifonctionnel, comprenant :
une unité de circulation (1) ayant une entrée (11), une sortie (12) et une fenêtre de détection (13),
un module d'échantillonnage (2), comprenant :
un ensemble de support (21) connecté à l'unité de circulation (1),
une première partie de plaque (23), une première partie de transmission de lumière (24), une deuxième partie de transmission de lumière (25) et une deuxième partie de plaque (26) disposées sur l'ensemble de support (21) dans une direction axiale le long de la fenêtre de détection (13) de l'intérieur vers l'extérieur de l'unité de circulation (1), la première partie de plaque (23) et la première partie de transmission de lumière (24) étant disposées dans l'unité de circulation (1), et la deuxième partie de transmission de lumière (25) et l'ensemble de support (21) scellant ensemble la fenêtre de détection (13), et un espace d'écoulement d'échantillon étant prévu entre la deuxième partie de transmission de lumière (25) et la première partie de transmission de lumière (24), la deuxième partie de plaque (26) étant configurée pour réfléchir de manière diffuse la lumière, et
un module de commutation de trajet de lumière (27) disposé entre la seconde partie de transmission de lumière (25) et la seconde partie de plaque (26), le module de commutation de trajet de lumière (27) ayant un premier état et un second état, et
une fibre optique multicœur (3) disposée sur le module d'échantillonnage (2) selon un angle par rapport à la seconde partie de transmission de lumière (25),
dans lequel dans le premier état, la lumière provenant de la fibre optique multicœur (3) est réfléchie par un réflecteur (2712) compris dans le module de commutation de trajet de lumière (27) vers la seconde partie de plaque (26), et dans le second état, la lumière provenant de la fibre optique multicœur (3) est dirigée à travers la seconde partie de transmission de lumière (25) dans l'unité de circulation (1), **caractérisé en ce que** :
le module de commutation de trajet de lumière (27) comprend un support (271) disposé entre la deuxième partie de transmission de lumière (25) et la deuxième partie de plaque (26), le support (271) comprenant une plaque de base (2711) qui est pourvue du réflecteur (2712) et une partie d'ombrage (2713) faisant saillie par rapport à la plaque de base (2711) vers la deuxième partie de plaque (26), le support (271) étant mobile par rapport à la deuxième partie de plaque (26) de manière à réaliser une commutation entre le premier état et le deuxième état, et
la plaque de base (2711) est reliée de manière coulissante à l'ensemble de support (21), le réflecteur (2712) et la partie d'ombrage (2713) étant disposés en rangée le long de la direction de coulissement de la plaque de base (2711), et la commutation entre le premier état et le deuxième état étant réalisée par glissement de la plaque de base (2711) afin d'ajuster la position du réflecteur (2712) ou de la partie d'ombrage (2713) par rapport à la deuxième partie de plaque (26).

2. Dispositif d'acquisition spectrale en ligne multifonctionnel selon la revendication 1, dans lequel
le module de commutation de trajet de lumière (27)comprend en outre un mécanisme d'entraînement pour entraîner le déplacement de l'ensemble de support (21) et un capteur de position (273) pour détecter la position de l'ensemble de support (21), le mécanisme d'entraînement comprenant un moteur (2721), un engrenage (2722) prévu sur l'arbre de sortie du moteur (2721), une crémaillère (2723) s'accouplant avec l'engrenage (2722) et prévue sur le côté de la plaque de base (2711) éloigné de la fibre optique multicœur (3), et un mécanisme de guidage prévu entre la plaque de base (2711) et l'ensemble de support (21).

3. Dispositif d'acquisition spectrale en ligne multifonctionnel selon la revendication 1, dans lequel
la partie d'ombrage comprend une plaque d'ombrage (2713) et une plaque latérale (2714) en liaison avec la plaque d'ombrage (2713) et avec la plaque de base (2711), le côté de la plaque d'ombrage (2713) éloigné de la deuxième partie de plaque (26) et la plaque latérale (2714) entourant un espace d'ombrage (2716), le côté de l'espace d'ombrage (2716) faisant face à la fibre optique multicœur (3) étant une structure d'ouverture (2715), et dans lequel dans le second état, la lumière provenant de la fibre optique multicœur (3) irradie la seconde partie de transmission de lumière (25) à travers la structure d'ouverture (2715).

4. Dispositif d'acquisition spectrale en ligne multifonctionnel selon la revendication 1, dans lequel
la surface d'une partie structurelle dans le module d'échantillonnage (2) est formée d'une couche noire par sablage, la partie structurelle comprenant l'ensemble de support (21), la plaque de base (2711) et la partie d'ombrage.

5. Dispositif d'acquisition spectrale en ligne multifonctionnel selon la revendication 1, dans lequel
la fibre optique multicœur (3) comprend une fibre optique émettrice de lumière (32) et une fibre optique réceptrice de lumière (31).

6. Dispositif d'acquisition spectrale en ligne multifonctionnel selon la revendication 1, dans lequel
un angle α entre la fibre optique multicœur (3) et l'axe de la deuxième partie émettrice de lumière (25) satisfait à 8° < α < 90°.

7. Dispositif d'acquisition spectrale en ligne multifonctionnel selon la revendication 1, dans lequel
l'unité de circulation (1) comprend un corps d'unité de circulation (14), l'entrée (11) et la sortie (12) étant prévues à des extrémités opposées du corps d'unité de circulation (14), le corps d'unité de circulation (14) comprenant un plan de support (144) sur lequel la fenêtre de détection (13) est prévue.

8. Dispositif d'acquisition spectrale en ligne multifonctionnel selon la revendication 7, dans lequel
l'ensemble de support (21) comprend une première plaque de support (211) rattachée au plan de support (144), un siège de fixation (212) relié à la première plaque de support (211) et s'étendant vers l'intérieur du corps d'unité de circulation (14), une deuxième plaque de support (213) disposée sur la première plaque de support (211) et utilisée pour fixer la deuxième partie de plaque (213), un siège de support (214) prévu sur la deuxième plaque de support (213) pour fixer la fibre optique multicœur (3), et une bague d'étanchéité prévue entre le plan de support (144) et la première plaque de support (211).

9. Dispositif d'acquisition spectrale en ligne multifonctionnel selon la revendication 1, dans lequel
la première partie de plaque (23) et la deuxième partie de plaque (26) sont des tableaux blancs, et la première partie de transmission de lumière (24) et la deuxième partie de transmission de lumière (25) sont en verre.
